# EUROPEAN PATENT APPLICATION

(11) **EP 1 916 603 A1**
(43) Date of publication of application: **30.04.2008**
(21) Application number: 06022172.8
(22) Date of filing: 23.10.2006
(51) Int. Cl.: G06F 11/36

(54) **Method and arrangement for locating input domain boundaries**

(71) Applicant: Codenomicon Ltd., 90570 Oulu (FI)
(72) Inventor: Kalksonen, Rauli, 90160 Oulu (FI)
(74) Representative: Söderman, Päivi Karin Lisbeth

(57) **Abstract**

Invention concerns a method for identifying a boundary value of an input domain in a system under test. The method comprises step of selecting at least one data field for testing. At least one initial input value is set for the selected at least one data field and a test message is constructed using said initial input value. Then the test message is sent to the system under test and the system under test produces an observable response. A tester computer observes a change in the response. A new test message with new input data value is created based on the observation of change. New messages are sent to the system under test until an input boundary value has been identified.

## Description

### TECHNICAL FIELD OF INVENTION

The invention relates to a method and arrangement for locating input domain boundaries in computer executable program code. Further, the invention relates to a method and an arrangement for testing the program code using values around the found domain boundary.

### BACKGROUND OF THE INVENTION

An input space of a software program can be divided to input domains. An input domain is a set of input values which are treated similarly in the software, i.e. by the same code block. Often domains divide the input space to accepted and rejected values. For example, the age of a person can only be a positive integer, negative values should be rejected.

Some software design and programming errors, such as off-by-one bugs, are known to exist on the boundaries of the input domains: either the value at the boundary or immediately next to a boundary value (e.g. handling ages -1, 0 or 1). Found bugs may possibly be security bugs since they are in the input-handling code of the program code.

A lot of effort has been placed on resolving the domains based on source code analysis. This approach is called "white-box analysis" (as opposed to "black-box analysis" where source code is not available). The main problem of such searches is the need for source code. Locating the boundaries is typically manual work, which requires expertise from the test designer.

Patent publication US5754760 teaches an automatic software testing method using graphical user interface. The method involves generating second set of input operations from first set of input operations, based on fitness values.

Patent publication US5892947 teaches a system and method usable in an automated software test support tool. The method produces software test programs from a logical description of selected software. Test programs are created by producing a cause-effect graph from the logical description, creating a decision table, producing test cases, and synthesizing test cases into a test program.

Patent publication US7032212 teaches a computerized test model generation method. The method involves assigning combinations of values to input parameters based particular usage, for submission to program module in a call during testing procedure.

In general, prior art teaches that input domains can be identified and tested by analyzing the software specification and the source code that implements the specification. However, it would be beneficial if the implementation details, i.e. program source code was not needed for the exhaustive identification of input domains in an implementation of a specification. Specifications do specify the domain to a certain extent, but specifications are often ambiguous and do not cover all aspects relating to implementation of the specification. This means that the actual input domains of software are likely to be unique to that software. It would be beneficial to have a method and system that search for the domains from the specifications and implementation automatically instead of manual process taught by prior art.

### OBJECT OF THE INVENTION

The object of the present invention is to provide a method, arrangement and computer readable media for identifying input domain boundaries of a computer software.

### SUMMARY OF THE INVENTION

The present invention provides a method and arrangement for automatically resolving the input domain boundaries by means that do not require knowledge about the implementation details of a specification. Such testing methods are generally called "black-box" testing methods. These tests might then be used to locate potential security-critical flaws.

The invention enhances the standard good practice of defining inputs to exercise all identified input domains and domain boundaries. This enhancement is achieved by observing the behavior of the tested system for each input, noticing changes in behavior, and then using that information to find out the true boundaries within the tested system. The found boundaries might then be thoroughly tested to get enhanced test coverage.

In a method of the present invention, an automated test system can create tests to identify flaws in the input data processing subsystems of a System Under Test (i.e. SUT). Advantageously, no source code or other implementation level details are required and the method may be based solely on the external behavior of the SUT. The method can thus be used whenever the SUT along with an external specification such as a communication protocol specification is available. Since the tests are created and executed automatically, the tester does not have to be a security expert.

During the process, a series of test messages or message sequences are prepared to be sent to the SUT. The process uses a description of the messages which enables to generate the messages and to parse incoming messages to a required extent. The description of the messages is typically available as the specification of the protocol to be tested.

Different input elements or fields in the messages, which have a continuous value space, are prepared with an initial set of input values. At minimum, there must be one initial input value. These initial input values should cover the entire possible input space of the tested element or field. For example, tests for an integer field might be prepared with a minimum integer value, maximum integer value and several values between the two. The intermediate values might be selected at an even interval to span the whole input space of the element or field. The number of intermediate values might vary depending on available time and bandwidth, but as an example there might be 1-50 different values to start with. In some cases, it is advantageous include some well-known candidate boundaries in the initial set of input values.

Once the initial set of input values has been defined, the test program sends a test message to the SUT with one of the initial input values and receives a response message. The test program observes value of at least one data field in the response message. Next, the test program sends another test message to the SUT with another one of the initial input values and receives another response message. If the value of the at least one observed data field of the response message changes between messages, an input boundary lies between the two input values. Now the test program may select a new input value between the aforementioned input values and send a new test message to the SUT with the new input value and observes the value of the data field(s) in the response message. This iterative process continues until the actual boundary value of the input domain has been found.

Once an input domain boundary has been found, the test program may perform any number of tests around the found value to check that the software performs flawlessly with values at and around the boundary.

Invention concerns a method for identifying a boundary value of an input domain in a system under test. The method comprises step of selecting at least one data field for testing. At least one initial input value is set for the selected at least one data field and a test message is constructed using said initial input value. Then the test message is sent to the system under test and the system under test produces an observable response. The tester computer observes a change in the response. A new test message with new input data value is created based on the observation of change. New messages are sent to the system under test until an input boundary value has been identified.

The invention also includes a system that implements the method disclosed herein.
The invention also includes a computer readable medium that comprises computer executable instructions to implement the method disclosed herein.
The best mode of the invention presently contemplated by the inventor applies the disclosure set forth herein to the searching of boundary values of input domains using advantageously black-box testing techniques.

Some embodiments of the invention are described herein, and further applications and adaptations of the invention will be apparent to those of ordinary skill in the art.

### BRIEF DESCRIPTION OF DRAWINGS

In the following, the invention is described in greater detail with reference to the accompanying drawings in which
Figure 1 shows an exemplary topology of the tester computer and system under test of the present invention,
Figure 2 shows an exemplary input space, initial input values for testing and candidate boundary value of a data field, and
Figure 3 shows an exemplary flow chart of the method of the present invention.

### DETAILED DESCRIPTION OF THE DRAWINGS

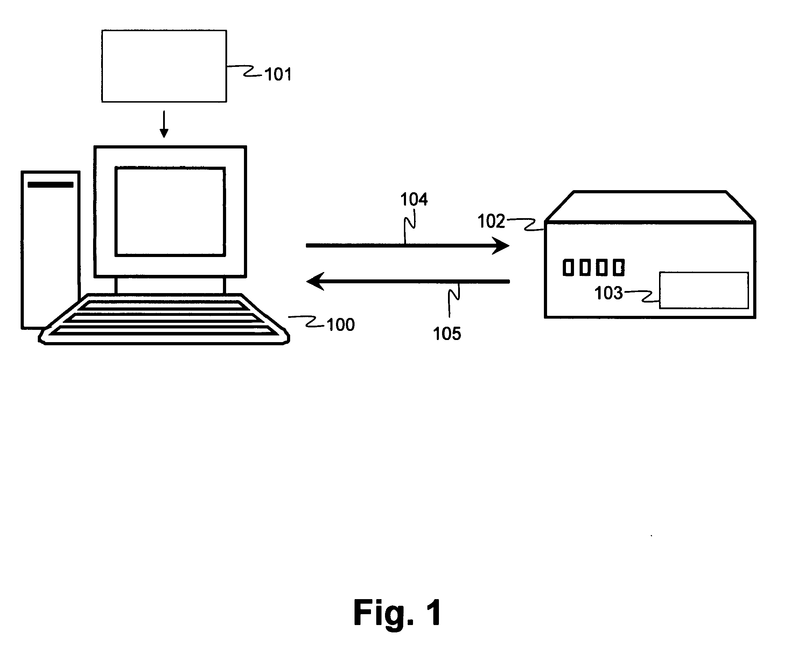

Figure 1 shows an exemplary networked computer arrangement where a method and system of the present invention may be used. The arrangement comprises a tester computer 100 comprising a processor and storage means. The tester computer is in network communication capable of exchanging messages 104, 105 between the tester computer and a system under test 102. The system under test 102 comprises some computer executable program code that is to be tested by the tester computer 100. The tester computer reads test instruction data 101 into its memory prior to performing the test. The test instruction data may for example comprise specification information about the tested protocol or file format. The tester computer creates test cases (test messages) based on the test instruction data and sends the test case data to the system under test advantageously as network messages 104. The system under test executes the test case data and optionally sends a response message 105 back to the tester computer using the network communication means. The arrangement described here is only an exemplary one and different variations can be made. For example, the tester computer, the system under test and the network communication means may be implemented as virtual computers all running in the same physical computer device.

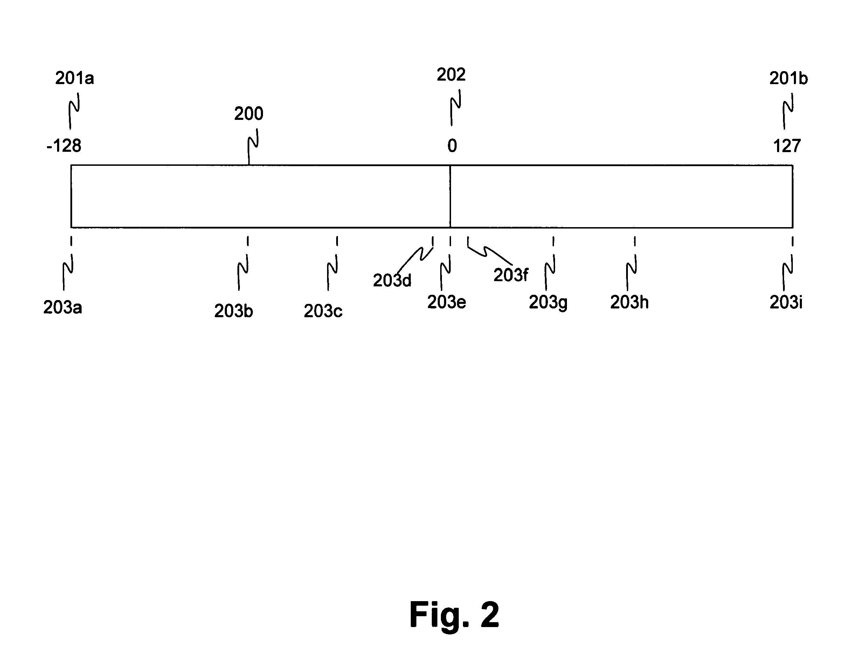

Figure 2 illustrates the process of searching a domain boundary of an input space 200. As an exemplary input value, a signed single-octet integer field, which might be present in a protocol message, is used. The extreme values 201 a and 201 b are -128 and 127. In this example, also values -1, 0, and 1 are included into the initial input values, since they are well-known special cases 203d-f. Additionally, some values 203b, 203c, 203g, 203h, between the extremes of the space may be included in the set of initial input values. In an embodiment of the present invention, a list of well-known special cases of initial input values may be maintained. The exemplary set of initial input values could be the following:
- 128, -77, -26, 1, 0, 1, 25, 76, 127

The set of initial input values may be used either immediately or the set may be saved for later use.

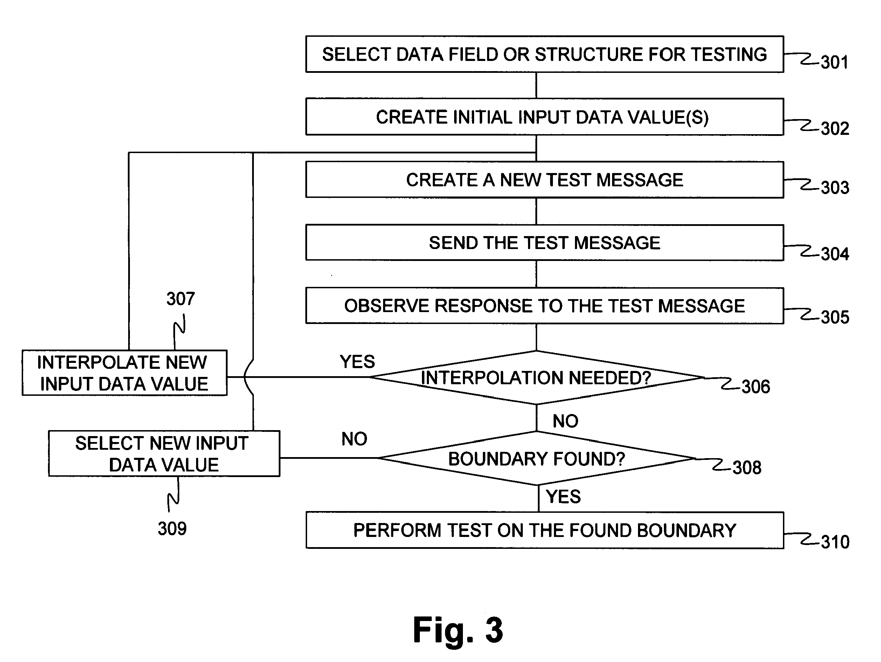

Figure 3 shows a flow chart of an exemplary embodiment of the method of the present invention. The first step of the boundary search is to select 301 the data field 200 or structure for testing and create 302 initial input values 203a-i for the selected data field or structure. At minimum, there needs to be one initial input value. Then, a test message containing at least one of the initial input values is created 303. These different values are sent 304 for example one at a time inside the element or field of a test message to the SUT. The SUT shall be observed in order to see any changes in its behavior 305, e.g. in the data value of field(s) of the response message that the SUT sends, when it is being exposed to the different values. When the behavior of the SUT changes, a domain boundary is assumed to lie between the last two values sent to the SUT and interpolation is needed 306. The exact boundary can be found with interpolation search algorithms well known in the prior art. For example, in an interpolation step 307, one may first try the middle value between the two values, create a new test message 303 and send the middle value to the SUT 304 and see in which of the two domains the response indicates 305. The search is then repeated by selecting a new value between the middle value and one of the two original input values. This process is repeated until the exact two consecutive values are known 308 between which the boundary changes. In cases that no interpolation is needed and no boundary is found 308, a new input value is selected 309 for example from the set of initial input data values or by some other means. If a boundary was found 308, a set of test(s) on the found boundary may be advantageously performed 310. The found boundary value may be stored for later use into the storage means of the tester computer 100, for example. The later use may include further execution of tests on the system under test. The reuse of found boundaries in the testing work may provide significant savings on the resource consumption.

In some embodiments of the present invention, the length of an element or data field might be interpreted as an input domain instead of the data value of the field or element. The element or field can be probed with values having different lengths to locate the length-domain boundaries. The prepared values might be the minimum length, maximum length (or a very large value if there is no maximum) and values with lengths between the minimum and maximum. This can be very effective testing method, since well-known "buffer overflow" software vulnerabilities can be discovered in this manner.

In the method of the present invention a way to notice when the SUT behavior changes is required. Such change indicates an input domain boundary. The behavior observations may be done using black-box or white-box testing methods in various embodiments of the present invention.

In embodiments of the invention employing black-box behavior observation, it can be assumed that the response message or messages sent by the SUT have different content or other characteristics when the request is in a different input domain. For example a single element, field or structure can be chosen to be observed from a response message sent by the SUT. In the example further below HTTP response codes are being used for doing this.

In some embodiments of the present invention the responses from the SUT as a whole may be observed and any change in the response or responses may be interpreted to indicate a domain change. However, there may be elements which vary from one message to another even with identical inputs. Such elements may be excluded from the observation as they typically don't provide useful information about input domains. A time field, a unique session identifier, etc., might represent such variable elements. These variable elements may either be programmed into the system or they may advantageously be learned automatically during test generation and/or execution.

In embodiments of the invention containing the automatic learning functionality several identical messages are sent to the SUT, to which the SUT should answer in an identical manner, and learn which elements change value despite the identical inputs. These elements are advantageously filtered out from the behavior comparison of the input domain search process.

In addition to observing message contents from the SUT, the presence or absence of whole messages from the SUT may be observed in some embodiments of the invention. The observed messages might also be directed to different system components. Furthermore, a significant change in the response times for the request may be observed, which could indicate a change in the input domain.

In embodiments of the present invention where white-box techniques are utilized, the memory and/or CPU consumption of the SUT during the processing may be observed. The call path of the relevant processes, or the functions or libraries called by the relevant processes may be followed.

In general, any external or internal behavior of the SUT might be used to identify boundaries of input domains.

Searching for input domains is only applicable when it is possible to interpolate between the element or field values which produce different behavior in the SUT. The following list presents a few such elements or fields, but it is not intended to be exhaustive.
- Integer value including type fields, enumerations, length fields, sequence numbers, data fields, etc.
- Floating point values
- Time and date values
- Lengths of strings, raw data blocks, substructures, names, commands, parameters, etc.
- Number of elements in a structure
- Number of separator or whitespace characters or elements between value elements
- Address values, such as IPv4, IPv6, Ethernet addresses, Bluetooth Hardware addresses
- Depth of recursive structures

The following example illustrates the domain search principle by using HTTP (HyperText Transfer Protocol) to find input domains from an HTTP server.

A simple HTTP GET request can have the form
GET a HTTP/1.0 .

The request is made up of method string 'GET', URI of the requested information 'a', keyword 'HTTP', slash-character and version information '1.0'. Whitespace is present between method and URI also between URI and 'HTTP'. A request contains also new line characters, and optional header lines following the request line, but all this is omitted here for brevity. For testing, it should be noticed that version information is a decimal number, thus having a continuous range. Method string, URI string and version information can have a variable length. Length of the whitespace blocks present in the request may also vary. All these ranges might be varied to locate input domain boundaries from the tested system. For this example, the requested information URI has been chosen for testing. In the sample above 'a' stands for the requested information. An HTTP server responds to a request with a message which starts with a status line. For example one HTTP server might respond to the above GET request line by
HTTP/1.1 400 Bad Request
where '400' is the HTTP status code. The status code indicates the response of the server in a compact form. Code '400' stands for "Bad Request" (the resource 'a' was not found).

An HTTP server may have a maximum length for the request line, after which it will refuse to process the request further. This maximum length is important to include into the tests, since a programming error might exist in the code for detecting the width of the request line and making a decision whether to continue to process the request or to reject it.

In order to find the maximum length for this element, the server is first sent a request for a very short resource, a single 'a' character, and a very long resource, 10000 'a' characters, and the response codes are observed.

As already shown above, response code '400' was received for the single 'a' request. When sending the long request, the server responds with:
HTTP/1.1 414 Request-URI Too Large

Now the test program may interpolate and find the exact length where the status code changes. The example search proceeds in the following manner:

| Length | Status | Length for next try |
|---|---|---|
| 1 | 400 | - |
| 10000 | 414 | - |
| 5000 | 400 | 5000 +2500 |
| 7500 | 400 | 7500 +1250 |
| 8750 | 414 | 7500+625 |
| 8125 | 400 | 8125 +312 |
| 8437 | 414 | 8125 +156 |
| 8281 | 414 | 8125 +78 |
| 8203 | 414 | 8125 +39 |
| 8164 | 400 | 8164 +19 |
| 8183 | 414 | 8164 +9 |
| 8173 | 400 | 8173 +4 |
| 8177 | 400 | 8177 +2 |
| 8179 | 414 | 8177+1 |
| 8178 | 400 | (done) |

The search ended when it found the exact boundary between lengths 8178 and 8179.

In some embodiments of the present invention, more tests may be directed to testing the boundary after a boundary is found. Below some exemplary tests are mentioned:
- Value of other data fields or structures within the message or messages sent to the SUT may be altered, while keeping the searched value in the found boundary.
- If the found input domain boundary is based on the element length, different valid and invalid values for the element just shorter and longer than the boundary may be tried.
- For any textual data which is processed by the SUT, such as URLs processed by HTTP servers, different escape characters might be tried in a value which is on the boundary. Such value might be de-escaped by the server.

During the search for a particular domain boundary, the search process may find new sub-domains within the initially discovered domains. The process might recursively search the boundaries for any such sub-domains to test their boundaries, as well.

For any input domain where the domain ranges are known to be or discovered to be close to each other, so that an exhaustive search of all values in a range is possible, the system might try all individual values in the range to create efficient test cases.

To a person skilled in the art, the foregoing exemplary embodiments illustrate the model presented in this application whereby it is possible to design different methods and arrangements, which in obvious ways to the expert, utilize the inventive idea presented in this application.

## Claims

1. A method for identifying a boundary value of an input domain in a system under test (SUT) using a computer system comprising at least one tester computer, at least one system under test and network communication means between the tester computer and the system under test, wherein the method comprises the following steps:
a. the tester computer selecting at least one data field for testing,
b. the tester computer setting at least one initial input value for the selected at least one data field,
c. the tester computer constructing a test message using the initial input value,
d. the tester computer sending the test message computer to the system under test using the network communication means,
e. the system under test producing an observable response,
f. the tester computer observing a change in the response,
g. the tester computer creating a new test message with a new input data value chosen on the basis of the observation of change, and
h. repeating steps d - g until input boundary value has been identified.

2. A method according to claim 1, wherein said system under test sends a response message from which at least one data field or structure is selected for said observation of change.

3. A method according to claim 2, wherein at least one data field or structure of said response message is excluded from said observation of change.

4. A method according to claim 3, wherein said excluded data field or structure is determined by sending an unchanged test message to said system under test plurality of times and observing a change in the content of said response message.

5. A method according to claim 1, wherein the method further comprises a step of storing said input boundary value for later use.

6. A method according to claim 1, wherein the method further comprises a step of performing at least one testing operation based on said identified input boundary value.

7. A method according to claim 1, wherein said change in response is one of the following:
a. presence of a response message,
b. absence of a response message and
c. changed response time in receiving a response message.

8. A method according to claim 1, wherein at least one of said initial input values is selected randomly.

9. A method according to claim 1, wherein at least one of said initial input values is selected from a list of candidate boundary values.

10. A method according to claim 1, wherein said new input value is selected from list of said initial input values.

11. A method according to claim 1, wherein said new input value is determined using interpolation.

12. An arrangement for identifying a boundary value of an input domain in a system under test (SUT), the arrangement comprising at least one tester computer, at least one system under test and network communication means between the tester computer and the system under test, wherein:
a. the tester computer is arranged to select at least one data field for testing,
b. the tester computer is arranged to set at least one initial input value for the selected at least one data field,
c. the tester computer is arranged to construct a test message using the initial input value,
d. the tester computer is arranged to send the test message to the system under test using the network communication means,
e. the system under test is arranged to produce an observable response,
f. the tester computer is arranged to observe a change in the response,
g. the tester computer is arranged to create a new test message with a new input data value chosen based on the observation of change, and
h. the tester computer is arranged to repeat steps d - g until input boundary value has been identified.

13. An arrangement according to claim 12, wherein said system under test is further arranged to send using said network communication means a response message from which at least one data field or structure is arranged to be selected for said observation of change.

14. An arrangement according to claim 13, wherein said tester computer is arranged to exclude at least one data field or structure of said response message from said observation of change.

15. An arrangement according to claim 14, wherein said tester computer is arranged to determine said excluded data field or structure by sending an unchanged test message to said system under test plurality of times and by observing a change in the content of said response message.

16. An arrangement according to claim 12, wherein said tester computer is further arranged to store said input boundary value for later use.

17. An arrangement according to claim 12, wherein said tester computer is further arranged to perform at least one testing operation based on said identified input boundary value.

18. An arrangement according to claim 12, wherein said change in response is arranged to be one of the following:
a. presence of a response message,
b. absence of a response message and
c. changed response time in receiving a response message.

19. An arrangement according to claim 12, wherein the tester computer is arranged to select at least one of said initial input values randomly.

20. An arrangement according to claim 12, wherein the tester computer is arranged to select at least one of said initial input values from a list of candidate boundary values.

21. An arrangement according to claim 12, wherein said new input value is arranged to be selected from list of said initial input values.

22. An arrangement according to claim 12, wherein said new input value is arranged to be determined using interpolation.

23. A computer readable media wherein the media comprises computer executable instructions to implement the method of any of claims 1-11.
